# EUROPEAN PATENT APPLICATION

(11) **EP 4 545 670 A2**
(43) Date of publication of application: **30.04.2025**
(21) Application number: 24208196.6
(22) Date of filing: 22.10.2024
(51) Int. Cl.: C22C 38/12, C22C 38/00, C22C 38/02, C22C 38/04, B32B 15/01, C21D 9/46, H01M 50/119, H01M 50/124, H01M 50/133, H01M 50/107

(54) **STEEL SHEET FOR BATTERY CASES AND BATTERY CASE USING THE SAME**

(30) Priority: 23.10.2023 KR 20230141752; 08.10.2024 KR 20240136630; 21.10.2024 KR 20240144216
(71) Applicant: Samsung SDI Co., Ltd., Gyeonggi-do 17084 (KR)
(72) Inventor: SEO, Geun Ho, 16678 Suwon-si (KR); AHN, Jeong Chull, 16678 Suwon-si (KR); KIM, Shin Jung, 16678 Suwon-si (KR)
(74) Representative: Marks & Clerk LLP

(57) **Abstract**

A steel sheet for battery cases includes about 0.02 wt% to about 0.08 wt% carbon (C); about 0.01 wt% to about 0.1 wt% niobium (Nb); and the balance of iron (Fe).

## Description

### Field of the Invention

The present invention relates to a steel sheet for battery cases and a battery case including the same. More particularly, the present invention relates to a steel sheet for cylindrical battery cases with excellent high temperature properties and a cylindrical case including the same.

### Description of the Related Art

Rechargeable secondary batteries are used as energy sources for various electronic devices. In particular, rechargeable secondary batteries have attracted attention as energy sources for electric vehicles and hybrid electric vehicles, which are proposed as alternatives to gasoline and diesel vehicles that use fossil fuels.

Depending on the shape of a battery case, secondary batteries are classified into cylindrical or prismatic batteries, in which an electrode assembly is received in a cylindrical or prismatic metal can, and pouch type batteries, in which the electrode assembly is received in a pouch-shaped case of a laminated aluminium sheet.

Battery cases for cylindrical batteries are typically formed of aluminium or stainless steel, particularly austenitic stainless steel to increase rigidity of the battery cases.

However, cylindrical battery cases for electric vehicles have a problem of rapid decrease in yield strength at high temperature and it is not possible to prevent thermal runaway between cells due to rupture of a sidewall, particularly in the event of a fire.

As background technology for the present invention, although Korean Patent No. 10-2487834 discloses a cylindrical case made of ferritic stainless steel, this patent publication does not disclose a technique for maintaining strength by suppressing recrystallization of metal elements at high temperature.

This section is intended only to provide a better understanding of the background of the invention and thus may include information which is not necessarily prior art.

### Summary of the Invention

It is an aspect of the present invention to provide a steel sheet for battery cases with increased strength not only at room temperature but also at high temperature.

The steel sheet for battery cases may be used as a cylindrical battery case, wherein strength of the cylindrical battery case is greatly improved at a high temperature of about 600 °C or more, thereby preventing rupture of a sidewall and thermal runaway of a battery.

The above and other aspects and features of the present invention will become apparent from the following description of embodiments of the present invention.

In accordance with one aspect of the present invention, there is provided a steel sheet for battery cases, including: about 0.02 wt% to about 0.08 wt% of carbon (C); about 0.01 to about 0.1 wt% of niobium (Nb); and the balance of iron (Fe).

In accordance with another aspect of the present invention, there is provided a battery case formed of the steel sheet for battery cases and having an opening.

In accordance with a further aspect of the present invention, there is provided a cylindrical secondary battery including: a cylindrical case manufactured from the steel sheet for battery cases; a cap assembly sealing the cylindrical case; and an electrode assembly disposed inside the cylindrical can.

At least some of the above and other features of the invention are set out in the claims.

According to embodiments of the present invention, the steel sheet for battery cases can exhibit high mechanical properties not only at room temperature but also at a high temperature of 600 °C or more.

In typical plated steel sheets used in battery cases, recrystallization texture is generated at a high temperature of 600 °C or more, thereby causing deterioration in strength of the steel sheets due to large and uneven sizes of grains in the recrystallization texture, and in manufacture of an EV-oriented cylindrical battery case with such a steel sheet, the battery case is likely to suffer from rupture of a sidewall thereof at high temperature due to heat generation or combustion in a cell, thereby causing thermal runaway of a battery. However, steel sheets for battery cases according to embodiments of the invention exhibit high tensile strength even at a high temperature of about 600 °C or more and can prevent thermal runaway caused by rupture of the sidewall while improving overall strength of a cylindrical secondary battery including a cap-up, thereby enabling manufacture of a large-diameter cylindrical secondary battery having a diameter of ϕ46 or more.

The steel sheet for battery cases according to the embodiments of the present invention can achieve significant improvement in mechanical properties by adjusting the added amounts of recrystallization inhibition elements, and has greatly improved machinability to allow reduction in thickness to about 1.0 mm or less through forming of a cylindrical battery case, thereby enabling reduction in weight of the cylindrical secondary battery while effectively increasing capacity of the battery.

However, aspects and features of the invention are not limited to those described above and other aspects and features not mentioned will be clearly understood by those skilled in the art from the detailed description given below.

### Brief Description of the Drawings

The following drawings attached to this specification illustrate embodiments of the present invention, and further describe aspects and features of the present invention together with the detailed description of the present invention. Thus, the present invention should not be construed as being limited to the drawings:
FIG. 1 is a perspective view of a cylindrical secondary battery according to one embodiment of the present invention;
FIG. 2 is a perspective view of a prismatic battery according to one embodiment of the present invention;
FIG. 3 is a graph showing results of a room temperature rupture pressure test of a battery case according to one embodiment of the present invention; and
FIG. 4 is a graph showing results of a rupture pressure test of a battery case according to one embodiment of the present invention after heating at about 600 °C for about 10 minutes.

### Detailed Description of the Invention

Hereinafter, embodiments of the present invention will be described in detail with reference to the accompanying drawings. However, it should be understood that the following embodiments are provided by way of illustration and the present invention is not limited thereto and is defined only by the appended claims and equivalents thereto.

When an arbitrary element is referred to as being disposed (or located or positioned) "above" (or "below") or "on" (or "under") a component, it may mean that the arbitrary element is placed in contact with the upper (or lower) surface of the component and may also mean that another component may be interposed between the component and any arbitrary element disposed (or located or positioned) on (or under) the component.

Throughout the specification, unless specified otherwise, each element may be singular or plural. In addition, throughout the specification, when "A or B" is stated, it means A, B or A and B, unless specified otherwise.

As used herein, "combinations thereof" may refer to mixtures, stacks, composites, copolymers, alloys, blends, and reaction products of components.

Unless otherwise defined herein, particle diameter may refer to an average particle diameter. In addition, the particle diameter means an average particle diameter (D50) that refers to a particle diameter corresponding to 50% by volume in a volume cumulative distribution of corresponding particles. The average particle diameter may be measured by any method well known in the art, for example, by a particle size analyzer, a transmission electron microscope image or a scanning electron microscope image. Alternatively, the average particle diameter (D50) may be measured by counting the number of particles in each particle diameter range using a device employing a dynamic light-scattering method to analyze data, followed by calculating the average particle diameter (D50) based on the analyzed data. Alternatively, the average particle diameter (D50) may be measured by laser diffraction. More specifically, in measurement by laser diffraction, target particles are dispersed in a dispersant, introduced into a commercially available laser diffraction particle analyzer (for example, Microtrac MT 3000), and irradiated with ultrasound waves at about 28 kHz and a power of 60 W, followed by calculating the average particle size (D50) corresponding to 50 vol% by volume in the cumulative volume distribution of the particles in the measurement device.

Hereinafter, embodiments of the present invention will be described with reference to the accompanying drawings.

A steel sheet for battery cases according to embodiments of the present invention exhibits not only high yield strength at room temperature to resolve expansion of internal components of a battery, but also improved high temperature properties through significant increase in tensile strength and rupture pressure at a high temperature of about 600 °C. In particular, the steel sheet according to the present invention has excellent machinability and improved high temperature properties to be used as steel sheets for cylindrical battery cases of electric vehicles (EVs) and can suppress sidewall rupture during high temperature and high-power PPR tests of cylindrical batteries, thus securing safety of EVs.

The steel sheet for battery cases according to the present invention is low carbon steel and contains the following metal elements.

### Composition of steel sheet for battery cases

### Carbon (C)

Carbon (C) is added to secure strength of the steel sheet.

Specifically, carbon (C) is present in an amount of about 0.02 wt% to about 0.08 wt% (for example, 0.02 wt%, 0.03 wt%, 0.04 wt%, 0.05 wt%, 0.06 wt%, 0.07 wt%, or 0.08 wt%), preferably about 0.03 wt% to about 0.05 wt%, based on the total weight of the steel sheet. Within this range of carbon, the steel sheet can achieve target strength and can maintain toughness to allow a forming process, such as DI (Deep drawing and Ironing)/DRD (Drawing and Redrawing). Accordingly, the steel sheet can be used not only as a steel sheet for cylindrical battery cases but also as a steel sheet for battery cases of various secondary batteries.

### Silicon (Si)

Silicon serves to increase strength of the steel sheet through solid solution strengthening of the steel sheet and is an effective element for cementite spheroidization.

Silicon may be present in an amount of about 0.001 wt% to about 0.01 wt% (for example, 0.001 wt%, 0.002 wt%, 0.003 wt%, 0.004 wt%, 0.005 wt%, 0.006 wt%, 0.007 wt%, 0.008 wt%, 0.009 wt%, or 0.01 wt%).

Within this range, silicon can increase strength of the steel sheet, does not deteriorate platability thereof when forming a nickel-plated layer, and can maintain corrosion resistance of the steel sheet.

### Manganese (Mn)

Manganese (Mn) is a solid-state strengthening element and is effective in improvement in hardenability of the steel sheet to secure strength thereof.

Manganese (Mn) may be present in an amount of about 0.05 wt% to about 0.45 wt% (for example, 0.05 wt%, 0.06 wt%, 0.07 wt%, 0.08 wt%, 0.09 wt%, 0.1 wt% (e.g. 0.10 wt%), 0.11 wt%, 0.12 wt%, 0.13 wt%, 0.14 wt%, 0.15 wt%, 0.16 wt%, 0.17 wt%, 0.18 wt%, 0.19 wt%, 0.2 wt% (e.g. 0.20 wt%), 0.21 wt%, 0.22 wt%, 0.23 wt%, 0.24 wt%, 0.25 wt%, 0.26 wt%, 0.27 wt%, 0.28 wt%, 0.29 wt%, 0.3 wt% (e.g. 0.30 wt%), 0.31 wt%, 0.32 wt%, 0.33 wt%, 0.34 wt%, 0.35 wt%, 0.36 wt%, 0.37 wt%, 0.38 wt%, 0.39 wt%, 0.4 wt% (e.g. 0.40 wt%), 0.41 wt%, 0.42 wt%, 0.43 wt%, 0.44 wt%, or 0.45 wt%). Preferably, manganese is present in an amount of about 0.1 wt% to about 0.35 wt%.

Within this range, manganese can improve machinability of the steel sheet to facilitate manufacture of a cylindrical battery case through a forming process and allows the cylindrical battery case to achieve target strength even when the thickness of the cylindrical battery case is reduced after forming. In addition, it is possible to maintain corrosion resistance of the steel sheet, such as in batteries, and to prevent deterioration in toughness of low carbon steel by preventing formation of inclusions and center segregation in the steel sheet.

### Phosphorus (P)

Phosphorus is added to achieve hardening of the steel sheet and improvement in corrosion resistance of the steel sheet.

Phosphorus may be present in an amount of about 0.01 wt% to about 0.02 wt% (for example, 0.01 wt% (e.g. 0.010 wt%), 0.011 wt%, 0.012 wt%, 0.013 wt%, 0.014 wt%, 0.015 wt%, 0.016 wt%, 0.017 wt%, 0.018 wt%, 0.019 wt%, or 0.02 wt% (e.g. 0.020 wt%)). Preferably, phosphorus is present in an amount of 0.01 wt% to about 0.015 wt% (e.g. 0.010 wt% to about 0.015 wt%).

Within this range, phosphorus can maintain corrosion resistance of the steel sheet and enables surface hardening thereof.

### Sulfur (S)

Sulfur is an unavoidable impurity and the content of sulfur must be limited since sulfur can reduce process efficiency through deterioration in ductility of the steel sheet during hot working and through increase in brittleness of the steel sheet when combined with manganese to form MnS precipitates.

Sulfur may be present in an amount of about 0.01 wt% to about 0.015 wt% (for example, 0.01 wt%, 0.011 wt%, 0.012 wt%, 0.013 wt%, 0.014 wt%, or 0.015 wt%). Within this range of sulfur, it is possible to prevent embrittlement fracture during hot working and to maintain machinability.

### Nitrogen (N)

Nitrogen present in a solid solution state in steel can reduce machinability of the steel sheet.

Nitrogen is limited to an upper limit of about 0.006 wt% or less (for example, 0.001 wt%, 0.002 wt%, 0.003 wt%, 0.004 wt%, 0.005 wt%, or 0.006 wt%). Within the range, nitrogen can prevent deterioration in ductility of the steel sheet due to aging.

### Recrystallization inhibition element

### Niobium (Nb)

Niobium (Nb) is added to low carbon steel to form carbides, such as NbC, which can improve strength through grain boundary segregation caused by the carbides while suppressing expansion of recrystallization texture due to formation of recrystallization grains at high temperature by increasing the recrystallization temperature.

Niobium is present in an amount of about 0.01 wt% to about 0.1 wt% (for example, 0.01 wt%, 0.02 wt%, 0.03 wt%, 0.04 wt%, 0.05 wt%, 0.06 wt%, 0.07 wt%, 0.08 wt%, 0.09 wt%, or 0.1 wt%). Preferably, niobium is present in an amount of about 0.03 wt% to about 0.05 wt%.

Within this range, niobium can increase yield strength at room temperature while suppressing the formation of recrystallization grains at high temperature, thereby improving tensile strength of the steel sheet while achieving significant improvement in high temperature properties.

### Molybdenum (Mo)

Molybdenum can improve strength of the steel sheet through solid solution strengthening and can also improve corrosion resistance and hardenability of the steel sheet.

Molybdenum (Mo) may be present in an amount of about 0.05 wt% to about 0.9 wt% (for example, 0.05 wt%, 0.06 wt%, 0.07 wt%, 0.08 wt%, 0.09 wt%, 0.1 wt%, 0.11 wt%, 0.12 wt%, 0.13 wt%, 0.14 wt%, 0.15 wt%, 0.16 wt%, 0.17 wt%, 0.18 wt%, 0.19 wt%, 0.2 wt%, 0.21 wt%, 0.22 wt%, 0.23 wt%, 0.24 wt%, 0.25 wt%, 0.26 wt%, 0.27 wt%, 0.28 wt%, 0.29 wt%, 0.3 wt%, 0.31 wt%, 0.32 wt%, 0.33 wt%, 0.34 wt%, 0.35 wt%, 0.36 wt%, 0.37 wt%, 0.38 wt%, 0.39 wt%, 0.4 wt%, 0.41 wt%, 0.42 wt%, 0.43 wt%, 0.44 wt%, 0.45 wt%, 0.46 wt%, 0.47 wt%, 0.48 wt%, 0.49 wt%, 0.5 wt%, 0.51 wt%, 0.52 wt%, 0.53 wt%, 0.54 wt%, 0.55 wt%, 0.56 wt%, 0.57 wt%, 0.58 wt%, 0.59 wt%, 0.6 wt%, 0.61 wt%, 0.62 wt%, 0.63 wt%, 0.64 wt%, 0.65 wt%, 0.66 wt%, 0.67 wt%, 0.68 wt%, 0.69 wt%, 0.7 wt%, 0.71 wt%, 0.72 wt%, 0.73 wt%, 0.74 wt%, 0.75 wt%, 0.76 wt%, 0.77 wt%, 0.78 wt%, 0.79 wt%, 0.8 wt%, 0.81 wt%, 0.82 wt%, 0.83 wt%, 0.84 wt%, 0.85 wt%, 0.86 wt%, 0.87 wt%, 0.88 wt%, 0.89 wt%, or 0.9 wt%). Preferably, molybdenum is present in an amount of about 0.08 wt% to about 0.1 wt%.

Within this range, molybdenum can prevent generation of the recrystallization texture by suppressing recrystallization of grains during heat treatment and can suppress decrease in yield strength at high temperature, thereby realizing the effects of the present invention.

### Boron (B)

Boron is a non-metal element and serves to significantly improve hardenability of low carbon steel. In addition, boron may be used as a precipitation hardening element and also serves to improve hardness and wear resistance.

Boron may be present in an amount of about 0.001 wt% to about 0.05 wt% (for example, 0.001 wt%, 0.002 wt%, 0.003 wt%, 0.004 wt%, 0.005 wt%, 0.006 wt%, 0.007 wt%, 0.008 wt%, 0.009 wt%, 0.01 wt%, 0.011 wt%, 0.012 wt%, 0.013 wt%, 0.014 wt%, 0.015 wt%, 0.016 wt%, 0.017 wt%, 0.018 wt%, 0.019 wt%, 0.02 wt%, 0.021 wt%, 0.022 wt%, 0.023 wt%, 0.024 wt%, 0.025 wt%, 0.026 wt%, 0.027 wt%, 0.028 wt%, 0.029 wt%, 0.03 wt%, 0.031 wt%, 0.032 wt%, 0.033 wt%, 0.034 wt%, 0.035 wt%, 0.036 wt%, 0.037 wt%, 0.038 wt%, 0.039 wt%, 0.04 wt%, 0.041 wt%, 0.042 wt%, 0.043 wt%, 0.044 wt%, 0.045 wt%, 0.046 wt%, 0.047 wt%, 0.048 wt%, 0.049 wt%, or 0.05 wt%). Preferably, boron is present in an amount of about 0.01 wt% to about 0.03 wt%.

Within this range, boron can improve strength of the steel sheet while preventing generation of the recrystallization texture at high temperature by increasing the recrystallization temperature, thereby realizing the effects of the present invention.

### Steel sheet for battery cases

In one embodiment, the steel sheet for battery cases is manufactured with the above compositions of the metal elements to realize improved mechanical properties at a high temperature of about 600 °C.

The steel sheet for battery cases may include a matrix steel sheet including the metal elements described above, a heat diffusion layer (Fe-Ni), and a nickel (Ni) plated layer.

The steel sheet for battery cases includes niobium as a recrystallization inhibition element and may further include molybdenum, boron, or combinations thereof.

By controlling the composition system of the metal elements in the steel sheet for battery cases and adding the aforementioned kind of recrystallization inhibition element thereto, it is possible to effectively prevent generation of the recrystallization texture at a high temperature of about 600 °C or more and to improve high temperature properties of the steel sheet for battery cases.

In one embodiment, the steel sheet for battery cases does not produce the recrystallization texture at a high temperature of about 600 °C or more and allows work hardening upon rolling to exhibit not only high strength at room temperature but also high temperature properties that ensure high strength at high temperature without deterioration in elongation at high temperature.

In one embodiment, the steel sheet for battery cases may have a thickness of about 0.3 mm to about 0.8 mm (for example, 0.3 mm, 0.4 mm, 0.5 mm, 0.6 mm, 0.7 mm, or 0.8 mm).

Within this range of thickness, the steel sheet for battery cases can secure strength while maintaining machinability and can reduce the overall weight of a battery when applied to a cylindrical battery case.

In one embodiment, the steel sheet for battery cases may further include a nickel-plated layer.

The steel sheet for battery cases may further include a nickel-plated layer on a cold-rolled steel strip including the metal elements and the recrystallization inhibition elements. For example, the steel sheet may refer to a nickel-plated steel sheet (NPS) with a controlled composition system of the matrix steel sheet.

When the steel sheet for battery cases is a nickel-plated steel sheet including a nickel-plated layer, the steel sheet has a lower degree of hardness increase due to work hardening after machining of a cylindrical battery case than a ferritic stainless steel sheet or an austenitic stainless steel sheet, and thus exhibits excellent formability, thereby improving efficiency of the manufacturing process of the cylindrical battery case.

When the steel sheet for the battery case is a nickel-plated steel sheet, the steel sheet can secure corrosion resistance and electrical conductivity and thus can be used not only as a cylindrical battery case but also as a battery case for various secondary batteries.

In one embodiment, the nickel-plated layer may have a thickness of about 0.1 µm to about 6 µm (for example, 0.1 µm, 0.2 µm, 0.3 µm, 0.4 µm, 0.5 µm, 0.6 µm, 0.7 µm, 0.8 µm, 0.9 µm, 1 µm, 1.1 µm, 1.2 µm, 1.3 µm, 1.4 µm, 1.5 µm, 1.6 µm, 1.7 µm, 1.8 µm, 1.9 µm, 2 µm, 2.1 µm, 2.2 µm, 2.3 µm, 2.4 µm, 2.5 µm, 2.6 µm, 2.7 µm, 2.8 µm, 2.9 µm, 3 µm, 3.1 µm, 3.2 µm, 3.3 µm, 3.4 µm, 3.5 µm, 3.6 µm, 3.7 µm, 3.8 µm, 3.9 µm, 4 µm, 4.1 µm, 4.2 µm, 4.3 µm, 4.4 µm, 4.5 µm, 4.6 µm, 4.7 µm, 4.8 µm, 4.9 µm, 5 µm, 5.1 µm, 5.2 µm, 5.3 µm, 5.4 µm, 5.5 µm, 5.6 µm, 5.7 µm, 5.8 µm, 5.9 µm, or 6 µm).

The nickel-plated layer may include about 50 wt% or more (for example, 50 wt%, 60 wt%, 70 wt%, 80 wt%, or 90 wt%) of nickel and may have a thickness in the above range to secure a sufficient heat spreading layer while improving corrosion resistance.

The nickel-plated layer may be subjected to heat diffusion after plating.

For example, the nickel-plated layer may be formed by electroplating a cold-rolled steel sheet in a plating bath after acid washing of the cold-rolled steel sheet, followed by alloying heat treatment and annealing to form a heat diffusion layer thereon. More specifically, the heat diffusion layer may be formed as a nickel-iron diffusion layer. The nickel-iron diffusion layer may be formed between the nickel-plated layer and the matrix steel sheet.

The steel sheet for battery cases may be subjected to work hardening.

The steel sheet for battery cases may be subjected to work hardening to a range in which a cylindrical battery case to be used in a cylindrical secondary battery can be manufactured and hardness deviation does not occur. For example, the degree of work hardening is controlled by cold rolling and annealing NPS with a controlled composition system, whereby the cylindrical battery case can have very uniform thicknesses on outer and inner diameters thereof even after DI processing and can maintain parallelism of an opening after trimming.

In one embodiment, the steel sheet for battery cases may have a tensile strength of about 470 MPa or more and an elongation of about 23% or more at room temperature. Specifically, the steel sheet for battery cases may have a tensile strength of about 470 MPa to about 490 MPa and an elongation of about 23% to 25%.

The steel sheet for battery cases can exhibit the tensile strength and the elongation within the above ranges at room temperature of about 25 °C by controlling the composition system of the metal elements and the recrystallization inhibition elements.

Within the above ranges of properties at room temperature, the steel sheet for battery cases can be used as a battery case and has improved machinability to allow thickness reduction, thereby enabling manufacture of large-diameter cylindrical battery cases.

In one embodiment, the steel sheet for battery cases may have a tensile strength of about 200 MPa or more at about 500 °C. Specifically, the steel sheet for battery cases may have a tensile strength of about 200 MPa to about 255 MPa at about 500 °C and a tensile strength of about 130 MPa to about 170 MPa at about 600 °C.

By controlling the composition system of the metal elements and adding the recrystallization inhibition elements, the steel sheet for battery cases exhibits not only high strength at room temperature but also high temperature properties that ensures high strength at high temperature. For example, the steel sheet for battery cases may be manufactured through rolling, annealing and plating, and may be subjected to work hardening during machining of a battery case, thereby exhibiting not only excellent mechanical properties at room temperature, but also high temperature properties in the temperature range of about 500 °C to 600 °C while securing the target tensile strength within the above range.

The steel sheet for battery cases can increase tensile strength by about 2.7 times at a temperature of about 500 °C to 600 °C, as compared to steel sheet without recrystallization inhibition elements, even when the thickness of the steel sheet is reduced by about 50% by a forming process, for example, a DI process.

Since the steel sheet for battery cases can exhibit corrosion resistance by forming the nickel-plated layer on the steel sheet with the controlled composition system of the metal elements and the recrystallization inhibition elements, and can also exhibit not only improved yield strength at room temperature but also high temperature properties that ensures high tensile strength at high temperature, the steel sheet for battery cases can be used in an EV-oriented battery case and a cylindrical battery case.

### Battery case

A battery case according to one embodiment is manufactured from the steel sheet for battery cases as described above.

In one embodiment, the battery case is manufactured in a cylindrical shape by deep drawing and ironing (DI).

For example, the battery case may be manufactured by placing NPS in a cylindrical can-shaped die, followed by punching the NPS to simultaneously form a sidewall and a bottom, and may have an opening formed at an upper side thereof.

For austenitic or ferritic stainless steel, it is difficult to form beading part or to perform a clamping process due to increase in stiffness by work hardening during DI processing, and separate heat treatment and annealing processes are required to form the sidewall and the bottom with uniform thicknesses.

With the controlled composition system of the metal elements and the added recrystallization inhibition elements, the steel sheet for battery cases according to the embodiments can exhibit increased strength and improved machinability even at room temperature while restricting increase in stiffness due to work hardening during DI processing, and can allow plastic deformation, thereby making it very easy to manufacture cylindrical battery cases. In addition, the steel sheet for battery cases according to the embodiments restricts increase in residual stress due to hardness deviation even after machining and thus has an advantage of not requiring a separate annealing process.

In one embodiment, the battery case may have a thickness reduced by about 50% or less by DI processing and a sidewall of the battery case may have a thickness of about 0.15 mm to about 0.4 mm, for example, when the steel sheet for battery cases has a thickness of about 0.3 mm to about 0.8 mm (for example, 0.3 mm, 0.4 mm, 0.5 mm, 0.6 mm, 0.7 mm, or 0.8 mm).

The battery case can be reduced in thickness by controlling the thickness within the above range through DI processing, and, even when the thickness of the battery case is reduced to the above range, the battery case can maintain mechanical properties at room temperature and, in particular, can exhibit high temperature properties through significant improvement in tensile strength even at high temperature. In addition, the battery case is manufactured from the steel sheet for battery cases and thus restricts work hardening during DI processing, thereby securing very high manufacturing efficiency.

Thickness reduction through the forming process results in thickness reduction of a cylindrical case to increase capacity of the battery by about 10% or more while reducing the overall weight of the battery by about 30% or more, thereby enabling efficient manufacture of a cylindrical battery case having a large diameter of Φ46 or more.

In one embodiment, the battery case may have a tensile strength of about 760 MPa or more at room temperature. Specifically, the battery case may have a tensile strength of about 760 MPa to about 780 MPa at room temperature. Since the cylindrical battery case can exhibit the tensile strength within the above range at room temperature even after DI processing, the cylindrical battery case can be used in batteries for EVs requiring high strength and high heat resistance, can effectively protect the cell from various external impacts during driving at room temperature, and can effectively restrict case changes due to changes within the cell.

In one embodiment, the cylindrical battery case may have a tensile strength of about 320 MPa or more, specifically about 320 MPa to about 420 MPa, as measured at about 500 °C, and a tensile strength of about 240 MPa or more, specifically about 240 MPa to about 280 MPa, as measured at about 600 °C.

The battery case has increased strength, particularly at a high temperature in the range of about 500 °C to about 600 °C, and thus can effectively prevent fracture of the sidewall and the entire battery structure due to overheating or combustion in a cell.

In one embodiment, the battery case may have a sidewall rupture pressure of about 190 kgf/cm² or more, specifically about 190 kgf/cm² to about 210 kgf/cm², at room temperature.

Since the battery case is manufactured by DI processing of the steel sheet for battery cases with improved room temperature properties and does not undergo work hardening during DI processing, the battery case does not suffer from deviation in hardness on the sidewall and the bottom thereof and particularly, the sidewall of the battery case has a uniform thickness, thereby securing a rupture pressure within the above range.

The cylindrical battery case may be used in cylindrical secondary batteries having a rupture pressure within the above range.

In one embodiment, the battery case may have a rupture pressure of about 100 kgf/cm² or more at about 600 °C, specifically about 100 kgf/cm² to about 130 kgf/cm², at about 600 °C.

Since the recrystallization texture is not generated even at high temperature and recrystallization of grains is inhibited to prevent occurrence of cracking between the grains due to addition of the recrystallization inhibition elements, the cylindrical battery case can have a rupture pressure within the above range even at a high temperature of about 600 °C. The battery case according to the present embodiment can exhibit increase in rupture pressure by about 20 kgf/cm² or more at room temperature or a higher temperature (e.g., 600°C), as compared to a battery case manufactured by a typical cold-rolled steel sheet to which no recrystallization inhibition element is added.

In one embodiment, the battery case may maintain parallelism of the opening.

Since the cylindrical battery case allows easy plastic deformation upon DI processing and does not suffer from hardness deviation due to work hardening, the cylindrical battery case can include a sidewall and a bottom with uniform thicknesses, particularly a sidewall with a very uniform thickness, and can maintain constant parallelism of the opening due to no change in outer diameter, inner diameter, and thickness of the cylindrical battery case even after trimming of an upper end thereof subsequent to DI processing.

In one embodiment, the cylindrical battery case may be free from side rupture due to PPR testing at 600 °C.

The battery case has a controlled composition ratio of the metal elements and the recrystallization inhibition elements, is manufactured in a cylindrical shape through DI processing, does not suffer from work hardening during machining, and limits generation of the recrystallization texture even at a high temperature of 500 °C to 600 °C to improve high temperature properties including tensile strength, thereby enabling PPR response to increase in temperature due to cell failure and fracture in an EV-oriented battery module or pack with a greater number of battery cells.

### Cylindrical secondary battery

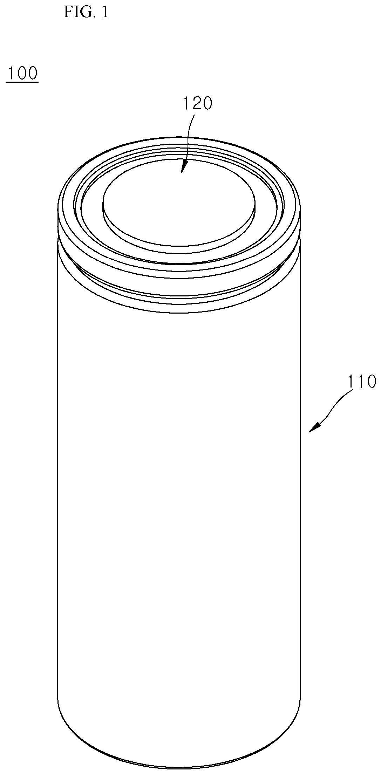

FIG. 1 is a perspective view of a cylindrical secondary battery according to one embodiment of the present invention.

Referring to FIG. 1, a cylindrical secondary battery 100 according to one embodiment includes an electrode assembly, a cylindrical battery case 110 configured to receive the electrode assembly and an electrolyte therein, a cap assembly 120 coupled to an opening of the cylindrical battery case 110 and sealing the cylindrical battery case 110, and an insulating plate interposed between the electrode assembly and the cap assembly within the cylindrical battery case 110.

The electrode assembly may include a first electrode, a second electrode and a separator interposed between the first and second electrodes, and may be wound in a jelly-roll shape.

The first electrode includes a first substrate and a first active material layer disposed on the first substrate. A first lead tab may extend outwards from a first non-coated region of the first substrate in which the first active material layer is not formed, and may be electrically connected to the cap assembly.

The second electrode includes a second substrate and a second active material layer disposed on the second substrate. A second lead tab may extend outwards from a second non-coated region of the second substrate in which the second active material layer is not formed, and may be electrically connected to the case. The first lead tab and the second lead tab may extend in opposite directions from each other.

The first electrode may act as a cathode. In this case, the first substrate may include, for example, aluminium foil, and the first active material layer may include, for example, a transition metal oxide. The second electrode may act as an anode. In this case, the second substrate may include, for example, copper foil or nickel foil, and the second active material layer may include, for example, graphite.

The separator serves to prevent short-circuit of the first and second electrodes while allowing migration of lithium ions. The separator may include, for example, a polyethylene film, a polypropylene film, a polyethylene-polypropylene film, or the like.

The cylindrical battery case 110 receives the electrode assembly and the electrolyte therein, and constitutes the exterior of the secondary battery together with the cap assembly 120. The cylindrical battery case 110 may include a sidewall having a substantially cylindrical shape and a bottom connected to one side of the sidewall. The sidewall may include an inwardly deformed beading portion and may be provided at an open end thereof with an inwardly bent crimping portion.

The beading portion can suppress movement of the electrode assembly within the case while facilitating seating of a gasket and the cap assembly. The crimping portion can securely hold the cap assembly in place by pressing an edge of the cap assembly 120 through the gasket. The case may be formed of, for example, nickel plated steel.

The cap assembly 120 may be secured to the interior of the crimping portion via the gasket to seal the case. The cap assembly may include a cap-up, a safety vent, a cap-down, an insulating member, and a sub-plate, and may be modified in various ways, without being limited thereto.

The cap-up may be placed at the uppermost side of the cap assembly. The cap-up may include a terminal convexly protruding upwards to be connected to an external circuit, and a vent formed around the terminal and configured to discharge gas.

The safety vent may be placed below the cap-up. The safety vent may include a protrusion, which convexly protrudes downwards and is connected to the sub-plate, and at least one notch placed around the protrusion.

When gas is generated, for example, due to overcharging or abnormal operation of the battery, the protrusion can be deformed upwards under pressure to be separated from the sub-plate, while the safety vent can be cut along the notch. The cut safety vent allows the gas to be discharged outside, thereby preventing explosion of the secondary battery.

The cap-down may be placed below the safety vent. The cap-down may include a first opening that exposes the protrusion of the safety vent and a second opening for venting gas. The insulating member may be interposed between the safety vent and the cap-down to insulate the safety vent and the cap down.

The sub-plate may be placed below the cap down. The sub-plate may be secured to a lower surface of the cap-down to block the first opening of the cap-down and the protrusion of the safety vent may be secured to the sub-plate. The first lead tab withdrawn from the electrode assembly may be secured to the sub-plate. Thus, the cap-up, the safety vent, the cap-down, and the sub-plate may be electrically connected to the first electrode of the electrode assembly.

The insulating plate may be disposed to adjoin the electrode assembly under the beading portion and may be provided with a tab opening for withdrawal of the first lead tab. The cap assembly electrically connected to the first electrode by the first lead tab may face the electrode assembly, with the insulating plate disposed therebetween, and may be insulated from the electrode assembly by the insulating plate.

The cylindrical secondary battery according to the embodiment can achieve improvement in capacity and weight reduction through improvement in room temperature properties to allow thickness reduction of the cylindrical battery case, allows PPR response at a high temperature of about 500 °C or more through improvement in high temperature properties, and can be manufactured as a large-diameter battery having a diameter of ϕ46 or more.

### Prismatic battery

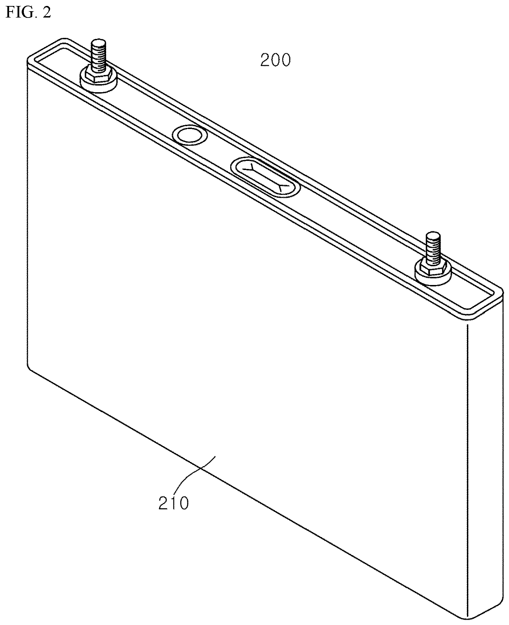

FIG. 2 is a perspective view of a prismatic battery according to one embodiment of the present invention.

Referring to FIG. 2, the prismatic battery 200 according to this embodiment includes a case 210 formed of the steel sheet for battery cases according to the embodiments of the invention.

Specifically, the prismatic battery may include at least one electrode assembly, which is wound with a separator interposed as an insulator between a cathode and an anode, a case 210 receiving the electrode assembly therein, and a cap assembly coupled to an opening of the case 210.

By way of example, a prismatic lithium-ion secondary battery will be described below as the prismatic battery 200 according to the embodiment of the present invention. However, it should be understood that the present invention is not limited thereto and may be applied to various batteries, such as lithium polymer batteries, cylindrical batteries, and the like.

Each of the cathode and the anode may include a coated region, which refers to a region in which an active material is applied to a current collector formed from a thin sheet of metal foil, and an uncoated region, which refers to a region to which no active material is applied.

The cathode and the anode are wound after interposing the separator as an insulator therebetween. However, it should be understood that the present invention is not limited thereto and the electrode assembly may also include pluralities of cathode sheets and anode sheets alternately stacked with separators interposed therebetween.

The case constitutes the overall appearance of the secondary battery and may be formed of a conductive metal, such as aluminium, aluminium alloys, or nickel-plated steel. The case may also provide a space in which the electrode assembly is accommodated.

The cap assembly may include a cap plate covering an opening of the case, in which the case and the cap plate may be formed of a conductive material. Here, a cathode terminal and an anode terminal electrically connected to the cathode or the anode may protrude outwards through the cap plate.

In addition, outer circumferential surfaces of upper columns of the cathode and anode terminals protruding outwards through the cap plate may be threaded and secured to the cap plate with nuts.

However, it should be understood that the present invention is not limited thereto and the cathode and anode terminals may have rivet structures to be riveted to the cap plate or may be welded thereto.

Further, the cap plate may be a thin plate to be coupled to the opening of the case and may be formed with an electrolyte inlet, in which a sealing stopper may be disposed, and a notched vent may be provided to the cap plate.

The cathode and anode terminals may be electrically connected to a current collector, which includes first and second current collectors (hereinafter referred to as cathode and anode collectors, respectively) welded to a cathode uncoated region or an anode uncoated region.

For example, the cathode and anode terminals may be welded to the cathode and anode current collectors. However, it should be understood that the present invention is not limited thereto and the cathode and anode terminals may be integrally formed with the cathode and anode collectors.

Further, the insulating member may be disposed between the electrode assembly and the cap plate. The insulating member may include first and second lower insulating members each disposed between the electrode assembly and the cap plate.

According to this embodiment, one end of a separating member, which faces one side surface of the electrode assembly, may be disposed between the insulating member and the cathode or anode terminal.

The separating member may include a first separating member and a second separating member.

Accordingly, one end of each of the first and second separating members, which may be disposed to face one side surface of the electrode assembly, may be disposed between the first and second lower insulating members and the cathode and anode terminals.

As a result, the cathode and anode terminals welded to the cathode and anode current collectors may be coupled to the corresponding ends of the first and second lower insulating members and the first and second separating members, respectively.

Next, the present invention will be described in more detail with reference to some examples. It should be understood that these examples are provided for illustration only and are not to be construed in any way as limiting the invention.

### Example: Composition system of metal element and recrystallization inhibition element

The amounts of metal elements and recrystallization inhibition elements were adjusted so as to improve texture properties of steel sheets not only at room temperature but also at high temperature by inhibiting formation of recrystallization texture.

Based on a low carbon steel (Comparative Example 1; Ref.) containing about 0.03 wt% of carbon (C) according to Table 1, slabs with controlled steel composition systems were plated with nickel in a nickel bath and annealed at a temperature of 800 °C or less, thereby finally preparing steel sheets for battery cases.

### Properties at room temperature and at high temperature

To check whether the steel sheets according to the embodiments can be utilized as battery cases, specimens prepared according to Table 1 were measured as to tensile strength and elongation at room temperature and at high temperature using a universal material testing machine.

A tensile strength of about 470MPa or more and an elongation of about 23% or more at room temperature (25°C) were set as target properties and a tensile strength of about 200 MPa or more at about 500 °C and a tensile strength of about 130MPa at about 600 °C were targeted to check whether the target values could be achieved.

**Table 1**

| Specimen | Component (wt%) | | | | Room temperature properties | | High temperature properties | | Remarks |
|---|---|---|---|---|---|---|---|---|---|
| | C | Nb | Mo | B | Tensile strength of 470 MPa or more | Elongation of 23% or more | Tensile strength @500 °C of 200 MPa or more | Tensile strength @600 °C of 130 MPa or more | |
| Comparative Example 1 | 0.03 | - | - | - | NG | OK | NG | NG | Poor |
| Comparative Example 2 | 0.05 | - | - | - | NG | OK | NG | NG | Poor |
| Comparative Example 3 | 0.003 | 0.03 | - | - | NG | OK | NG | NG | Poor |
| Comparative Example 4 | 0.003 | 0.03 | - | 0.005 | NG | OK | NG | NG | Poor |
| Experimental Example 1 | 0.03 | - | - | 0.005 | NG | OK | NG | NG | Poor |
| Experimental Example 2 | 0.05 | - | - | 0.005 | NG | OK | NG | NG | Poor |
| Example 1 | 0.02 to 0.08 | 0.01 to 0.1 | - | - | OK | OK | OK | OK | Good |
| Example 2 | 0.02 to 0.05 | 0.01 to 0.03 | 0.05 to 0.1 | - | OK | OK | OK | OK | Good |
| Example 3 | 0.02 to 0.05 | 0.01 to 0.03 | - | 0.005 to 0.01 | OK | OK | OK | OK | Good |
| Example 4 | 0.02 to 0.05 | 0.01 to 0.03 | 0.05 to 0.1 | 0.005 to 0.01 | OK | OK | OK | OK | Good |

Referring to Table 1, specimens of Comparative Examples 1 and 2 were low carbon steel conventionally used in battery cases, did not include the recrystallization inhibition elements according to the present invention, and had a tensile strength of about 419.5 MPa to about 422.6 MPa and an elongation of about 23.6% to about 26% at room temperature, a tensile strength of about 177 MPa at about 500 °C, and a tensile strength of about 99.6 MPa to about 111.1 MPa at about 600 °C, indicating that the targeted high temperature properties could not be achieved.

Despite an insufficient content of carbon, the specimen of Comparative Example 3 could secure the room temperature properties through addition of niobium. However, this specimen had a tensile strength of about 161 MPa at about 500 °C and a tensile strength of about 119.3 MPa at about 600 °C, indicating that the targeted high temperature properties could not be achieved.

Despite addition of boron, the specimen of Comparative Example 4 had a tensile strength of about 167.8 MPa at about 500 °C and a tensile strength of about 119 MPa at about 600 °C, indicating that the targeted high temperature properties could not be achieved.

When the carbon content according to the embodiment was not secured, it was confirmed that the targeted high temperature properties could not be achieved even by addition of additional recrystallization inhibition elements.

On the other hand, it was checked whether the targeted room and high temperature properties could be achieved according to combination of the recrystallization elements.

In Experimental Examples 1 and 2 where only boron was added, the specimens failed to achieve the targeted tensile strength at room temperature and it was confirmed that the specimens had a tensile strength of about 411 MPa to 415.7 MPa at room temperature, a tenstile strength of about 172.7 MPa to about 174.6 MPa at about 500 °C and a tensile strength of about 99.6 MPa to about 101 MPa at about 600 °C, indicating that the targeted high temperature properties could not be achieved when the recrystallization inhibition elements including niobium were not added.

In Example 1 where niobium was added, the specimen had a tensile strength of about 472.6 MPa or more and an elongation of about 24.8% or more at room temperature, a tensile strength of about 209 MPa or more at about 500 °C, and a tensile strength of about 135.3 MPa or more at about 600 °C, indicating that the targeted room temperature/high temperature properties could be achieved.

In Example 2 where molybdenum was added, the specimen had a tensile strength of about 485.6 MPa or more and an elongation of about 23% or more at room temperature, a tensile strength of about 250.8 MPa or more at about 500 °C, and a tensile strength of about 168.6 MPa or more at about 600 °C, indicating that the targeted room temperature/high temperature properties could be achieved.

In particular, it was confirmed that, when the content of molybdenum was increased, tensile strength at room temperature was increased to about 485 MPa or more, indicating improvement in tensile strength at room temperature.

In Example 3 where niobium and boron were added, the specimen had a tensile strength of about 472.3 MPa or more and an elongation of about 23.7% or more at room temperature, a tensile strength of about 219.2 MPa or more at about 500 °C, and a tensile strength of about 138.4 MPa or more at about 600 °C, indicating that the targeted room temperature/high temperature properties could be achieved.

In Example 4 where niobium, molybdenum, and boron were added as the recrystallization inhibition elements, the specimen had a tensile strength of about 485.1 MPa or more and an elongation of about 23.3% or more at room temperature, a tensile strength of about 251.8 MPa or more at about 500 °C, and a tensile strength of about 158.5 MPa or more at about 600 °C, indicating that the targeted room temperature/high temperature properties could be achieved.

Therefore, it could be seen that the steel sheets according to the embodiments could be utilized as a battery case, particularly as a cylindrical battery case, by controlling the carbon content of low-carbon steel while adding the recrystallization inhibition elements to achieve the targeted room temperature/high temperature properties.

### Properties of cylindrical battery case

To simulate a cylindrical battery case with a sidewall subjected to thickness ironing to about 50% by DI processing, steel sheets prepared according to Table 2 below were subjected to cold rolling at a reduction rate of about 50%.

**Table 2**

| Sample | Component (wt%) | | | Room temperature properties | High temperature properties | |
|---|---|---|---|---|---|---|
| | C | Nb | Mo | Tensile strength (MPa) | Tensile strength (MPa) at 500 °C | Tensile strength (MPa) at 600 °C |
| Experimental Example 3 | 0.03 | - | - | 753 | 319 | 103 |
| Experimental Example 4 | 0.05 | 0.03 | - | 804 | 329 | 147 |
| Experimental Example 5 | 0.05 | 0.03 | 0.05 | 776 | 380 | 242 |
| Experimental Example 6 | 0.05 | 0.03 | 0.1 | 763 | 411 | 275 |

Table 2 shows changes in room temperature/high temperature properties after cold rolling of steel sheets for battery cases depending on addition of recrystallization inhibition elements.

It could be seen that the samples of Experimental Examples 4 to 6 exhibited significant improvement in high temperature properties through improvement in tensile strength at room temperature and at high temperature, as compared with the sample of Experimental Example 3 (a comparative example), to which no recrystallization inhibition element was added. In particular, the tensile strength of the sample of Experimental Example 6 was about 2.7 times the tensile strength of the sample of Experimental Example 3 at a high temperature of about 600 °C or more, indicating significant improvement in high temperature properties after rolling. Accordingly, it was confirmed that the steel sheets according to the embodiments could reduce the thickness of the battery case while securing the high temperature properties.

### Rupture pressure of sidewall

The rupture pressure of the cylindrical battery case was measured for PPR response.

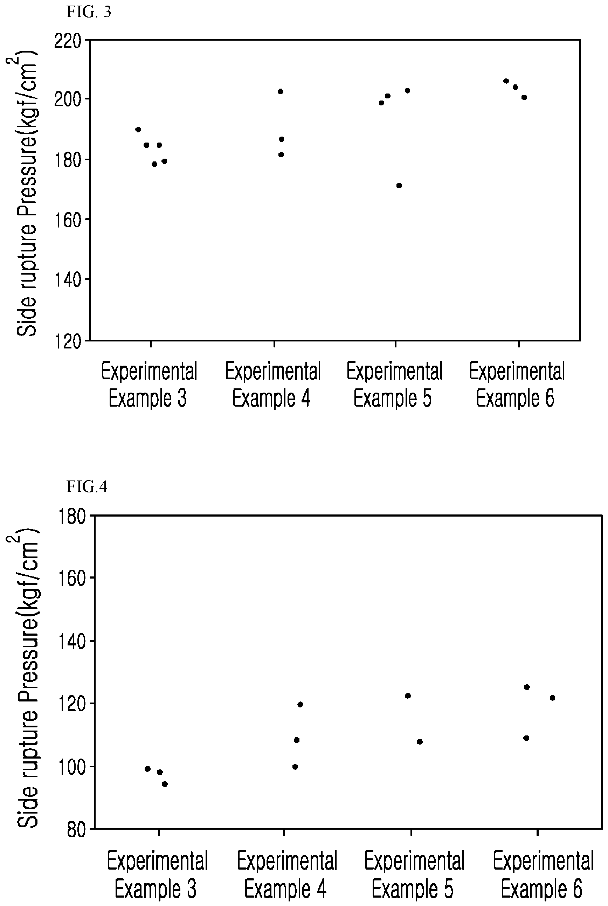

FIG. 3 is a graph showing results of a room temperature rupture pressure test of a battery case according to one embodiment of the present invention and FIG. 4 is a graph showing results of a rupture pressure test of a battery case according to one embodiment of the present invention after heating at about 600 °C for about 10 minutes.

Referring to Fig. 3, with no heat applied to the cylindrical battery case, the rupture pressure test was repeated five times at room temperature to determine the rupture pressure of the sidewall of the cylindrical battery case according to the embodiment.

**Table 3**

| No. | Experimental Example 3 | Experimental Example 4 | Experimental Example 5 | Experimental Example 6 |
|---|---|---|---|---|
| 1 | 189.7 | 181.5 | 171.3 | 203.9 |
| 2 | 184.6 | 202.9 | 200.9 | 200.9 |
| 3 | 184.6 | 186.6 | 198.8 | 206.0 |
| 4 | 179.5 | - | 202.9 | - |
| 5 | 178.5 | - | - | - |
| Average (kgf/cm²) | 183.3 | 190.3 | 193.5 | 203.6 |

Table 3 shows results of the rupture pressure test at room temperature.

The samples of Experimental Examples 4 to 6 satisfying the composition according to the embodiments had higher average rupture pressures than the sample of Experimental Example 3, which was a typical cold-rolled steel sheet. In particular, it was confirmed that the average rupture pressure of the sample of Experimental Example 6 was greater than that of the sample of Experimental Example 3 by about 20 kgf/cm² or more.

To measure the rupture pressure at high temperature, the cylindrical battery case was heated at about 600 °C for about 10 minutes, followed by measuring the rupture pressure again.

**Table 4**

| No. | Experimental Example 3 | Experimental Example 4 | Experimental Example 5 | Experimental Example 6 |
|---|---|---|---|---|
| 1 | 98.9 | 119.3 | - | 109.1 |
| 2 | 93.8 | 99.9 | 122.4 | 121.3 |
| 3 | 97.9 | 108.1 | 108.1 | 125.4 |
| Average (kgf/cm²) | 96.9 | 109.1 | 115.2 | 118.6 |

Table 4 shows results of the rupture pressure test of the cylindrical battery case after heating to about 600 °C.

Referring to FIG. 4 and Table 4, it was confirmed that the cylindrical battery cases of Experimental Examples 4 to 6 satisfying the composition according to the embodiments had high rupture pressures even at high temperature. In particular, an average rupture pressure of the cylindrical battery case of Experimental Example 6 was greater than that of the sample of Experimental Example 3 by about 22 kgf/cm² or more.

### PPR performance

A passive propagation resistance (PRR) test was performed to evaluate the degree of propagation to neighboring cells due to thermal runway of an ignited cell (initiator) in an EV/ESS that employs a large number of cylindrical batteries to constitute a battery module.

A 6 Ah cylindrical battery cell was prepared using a cylindrical can having a thickness of about 0.15 t (0.15 mm), which was formed by rolling the steel sheet of Example 2 at a reduction rate of about 50%.

A cylindrical battery cell with the same capacity was prepared by forming a cylindrical can having a thickness of about 0.25 t (0.25 mm) from the steel sheet of Comparative Example 1.

The PPR test was performed by bringing a 30W heating coil into contact with upper and lower surfaces of a cylindrical battery cell while changing applied power, as shown in Table 5, to check side rupture of the battery case.

**Table 5**

| Applied power | 30 W | 33 W | 45 W | 60 W | 70 W | 90W |
|---|---|---|---|---|---|---|
| Example 2 (0.151) | OK | OK | OK | OK | OK | NG |
| Comparative Example 1 (0.25t) | OK | OK | OK | OK | NG | NG |

Table 5 shows side rupture depending on the amount of power applied. Referring to Table 5, although the steel sheet of Example 2 was ruptured at the lower beading of the cylindrical battery case even by power application of 60W, the steel sheet of Example 2 did not suffer from side rupture.

Although the steel sheet of Example 2 had a further reduced thickness than the steel sheet of Comparative Example 1, it was confirmed that the cylindrical battery cell of Example 2 exhibited the same level of strength as the cylindrical battery cell of Comparative Example 1.

It was confirmed that the cylindrical battery cell manufactured using the steel sheet for battery cases according to the embodiment did not suffer from side rupture even upon application of a high power of about 60W in the PPR test and had the same level of PPR performance as a typical cylindrical battery manufactured using a steel sheet having a thickness of about 0.25t or more.

As such, the steel sheets for battery cases according to the embodiments can achieve not only high strength at room temperature while securing significant improvement in high temperature properties ensuring high strength at a high temperature of about 500 °C or more by adjusting the composition system of metal elements and the amounts of niobium, molybdenum and boron among recrystallization inhibition elements, and allows thickness reduction through improvement in yield strength at room temperature so as to allow manufacture of a large-diameter cylindrical battery having a diameter of ϕ46 or more, thereby achieving significant improvement in cell capacity. In particular, cylindrical battery cases manufactured from the steel sheets for battery cases according to the embodiments through DI processing exhibits improved high temperature properties and can effectively suppress side rupture, thereby enabling PPR response in manufacture of EV-oriented batteries.

Although the present invention has been described with reference to some embodiments and drawings, the present invention is not limited thereto. Various modifications and variations can be made by a person skilled in the art to which the present invention belongs within the scope of the invention and the claims and equivalents thereto.

### <List of Reference Numerals>

100: Cylindrical secondary battery
110: Cylindrical battery case
120: Cap Assembly
200: Prismatic Battery
210: Case

## Claims

1. A steel sheet for battery cases, comprising: about 0.02 wt% to about 0.08 wt% of carbon (C); about 0.01 wt% to about 0.1 wt% of niobium (Nb); and the balance of iron (Fe).

2. The steel sheet for battery cases according to claim 1, further comprising: about 0.05 wt% to about 0.9 wt% of molybdenum (Mo).

3. The steel sheet for battery cases according to claim 1 or claim 2, further comprising: about 0.001 wt% to about 0.05 wt% of boron (B).

4. The steel sheet for battery cases according to claim 1, further comprising: about 0.05 wt% to about 0.9 wt% of molybdenum (Mo) and about 0.001 wt% to about 0.05 wt% of boron (B).

5. The steel sheet for battery cases according to any one of claims 1 to 4, further comprising: about 0.001 wt% to about 0.01 wt% of silicon (Si), about 0.05 wt% to about 0.45 wt% of manganese (Mn), about 0.010 wt% to about 0.020 wt% of phosphorus (P), about 0.010 wt% to about 0.015 wt% of sulfur (S), and about 0.006 wt% or less of nitrogen (N).

6. The steel sheet for battery cases according to any one of claims 1 to 5, wherein the steel sheet is free from recrystallization texture at a temperature of about 600 °C or more.

7. The steel sheet for battery cases according to any one of claims 1 to 6, wherein the steel sheet has a thickness of about 0.3 mm to about 0.8 mm.

8. The steel sheet for battery cases according to any one of claims 1 to 7, further comprising: a nickel-plated layer, the nickel-plated layer has a thickness of about 0.1 µm to 6 µm and a heat diffusion layer is formed between the nickel-plated layer and the steel sheet.

9. The steel sheet for battery cases according to any one of claims 1 to 8, wherein the steel sheet has a tensile strength of about 470 MPa or more and an elongation of about 23% or more at room temperature.

10. The steel sheet for battery cases according to any one of claims 1 to 9, wherein the steel sheet has a tensile strength of about 200 MPa or more at about 500 °C and 130 MPa or more at about 600 °C.

11. A battery case manufactured from the steel sheet for battery cases according to any one of claims 1 to 10 and provided with an opening.

12. The battery case according to claim 11, wherein the battery case has a thickness reduced by 50% or less by forming and a tensile strength of 760 MPa or more at room temperature.

13. The battery case according to claim 12, wherein the battery case has a tensile strength of 320 MPa or more at 500 °C and a tensile strength of 240 MPa or more at 600 °C.

14. The battery case according to claim 12 or claim 13, wherein the battery case has a sidewall rupture pressure of 190 kgf/cm² or more at room temperature and a sidewall rupture pressure of 100 kgf/cm² or more at 600 °C.

15. A cylindrical secondary battery comprising:
a cylindrical case manufactured from the steel sheet for battery cases according to any one of claims 1 to 14;
a cap assembly sealing the cylindrical case; and
an electrode assembly disposed inside the cylindrical case.
